# FASCICULE DE BREVET EUROPEEN

(11) **EP 2 047 962 B1**
(45) Date de publication et mention de la délivrance du brevet: **15.06.2011**
(21) Numéro de dépôt: 08166261.1
(22) Date de dépôt: 09.10.2008
(51) Int. Cl.: B29C 47/02, B29L 30/00

(54) **Dispositif de gainage d'une nappe de fils à canaux d'alimentation symétriques**
Vorrichtung zur Ummantelung eines Kabelstrangs mit symmetrischen Stromversorgungskanälen
Device for sheathing a bundle of wires with symmetric runners

(30) Priorité: 11.10.2007 FR 0758235
(43) Date de publication de la demande: 15.04.2009
(73) Titulaire: Société de Technologie MICHELIN, 63000 Clermont-Ferrand (FR); MICHELIN Recherche et Technique S.A., 1763 Granges-Paccot (CH)
(72) Inventeur: Jaunet, Nicolas, 63119 Chateaugay (FR)
(74) Mandataire: Reynaud, Georges

(56) Documents cités:
- EP-A- 0 820 848
- DE-U1- 29 911 930
- US-A- 4 274 821
- US-A1- 2005 147 702

## Description

La présente invention concerne un dispositif pour l'extrusion d'une bande de gomme dans laquelle sont noyés des fils. Une telle bande est destinée notamment à être utilisée pour la fabrication d'un pneumatique.

Dans ce qui suit le terme fil désigne un élément filaire qui n'est pas nécessairement monofilament. Ainsi, un fil peut être un élément multifilaments, un câble ou un retors. Le fil peut être constitué d'une ou plusieurs matières comme, par exemple, une matière textile ou métallique. Le fil peut être traité ou non.

Généralement, dans une bande destinée à la fabrication d'un pneumatique, les fils sont régulièrement espacés entre eux et s'étendent suivant des directions coplanaires et parallèles entre elles.

Le document US 2005/0147702-A révèle un dispositif pour l'extrusion d'une bande de gomme ayant des fils parallèles noyés, dans ledit dispositif l'orifice d'extrusion présentant deux canaux principaux au lieu d'un seul.

Les documents DE29911930-U et EP 820848-A révèlent des dispositifs similaires d'extrusion qui présentent un seul canal secondaire au lie de deux.

On connaît aussi du document US-4,274,821 un dispositif pour l'extrusion de ce type de bande de gomme.

Ce dispositif comprend des moyens de canalisation de la gomme jusqu'à un orifice d'extrusion pour la mise en forme de la bande.

Ces moyens de canalisation comprennent un canal principal amont, relié à un dispositif d'alimentation en gomme, ainsi que des premier et second canaux secondaires aval prolongeant le canal principal amont et reliés à l'orifice d'extrusion par une chambre d'extrusion.

Ce dispositif comprend également des moyens de guidage des fils comprenant des canaux de guidage de fil munis chacun d'une extrémité aval et d'une extrémité amont en considérant la direction et le sens d'extrusion de la bande à travers l'orifice d'extrusion. L'extrémité aval débouche dans la chambre d'extrusion.

L'orifice d'extrusion présente une section sensiblement rectangulaire définie par des première et deuxième directions telles que la dimension de l'orifice suivant ces première et deuxième directions impose respectivement l'épaisseur et la largeur de la bande. En outre, le contour de cet orifice d'extrusion présente des premier et second plans de symétrie orthogonaux tels que leur droite d'intersection est sensiblement parallèle à la direction d'extrusion de la bande à travers l'orifice d'extrusion.

Chaque canal de guidage s'étend entre ses extrémités amont et aval suivant un trajet sensiblement rectiligne et parallèle au premier plan de symétrie, de façon que les fils débouchent dans la chambre d'extrusion sensiblement parallèlement à la direction d'extrusion.

Dans la chambre d'extrusion, les fils sont noyés en sandwich par la gomme canalisée dans les canaux secondaires débouchant dans la chambre d'extrusion.

Or, des pertes de charges sont engendrées par le frottement de la gomme contre les parois de chaque canal secondaire.

Le canal principal ayant le premier plan pour plan de symétrie et les deux canaux secondaires aval étant sensiblement symétriques l'un de l'autre par rapport au premier plan, les pertes de charge de deux trajets de gomme symétriques l'un de l'autre par rapport au premier plan et empruntant chacun un canal secondaire différent sont sensiblement égales dans chaque canal secondaire. De ce fait, la section de la bande a le premier plan pour plan de symétrie.

Toutefois, chaque canal s'étendant suivant un trajet courbe entre le canal principal et la chambre d'extrusion, les pertes de charge sont différentes selon le trajet emprunté par la gomme dans chaque canal. De ce fait, l'épaisseur de la bande est relativement irrégulière.

L'invention a pour but d'optimiser la régularité de l'épaisseur d'une bande de gomme telle que celle produite par un dispositif du type décrit dans US-4,274,821.

A cet effet, l'invention a pour objet un dispositif pour l'extrusion d'une bande de gomme dans laquelle sont noyés des fils, le dispositif, comme défini dans la revendication 1, étant du type comprenant :
- des moyens de canalisation de la gomme jusqu'à un orifice d'extrusion pour la mise en forme de la bande, le contour de cet orifice d'extrusion présentant des premier et second plans de symétrie orthogonaux tels que leur droite d'intersection est sensiblement parallèle à une direction d'extrusion de la bande à travers l'orifice d'extrusion,
- les moyens de canalisation comprenant un canal principal amont, ayant le premier plan pour plan de symétrie, prolongé par deux canaux secondaires aval sensiblement symétriques l'un de l'autre par rapport au premier plan,
caractérisé en ce que le canal principal et les deux canaux secondaires aval ont également le second plan pour plan de symétrie.

Des formes avantageuses de l'invention font l'objet des revendications dépendantes.

La bande produite par le dispositif selon l'invention présente une épaisseur régulière. En effet, le canal principal et les deux canaux secondaires aval ayant le second plan pour plan de symétrie, les pertes de charges sont sensiblement les mêmes quelque soit le trajet emprunté par la gomme dans chaque canal. Ainsi, la section de la bande a, en plus du premier plan de symétrie, le deuxième plan pour plan de symétrie et présente une épaisseur relativement régulière. Selon des caractéristiques optionnelles du dispositif selon l'invention :
- Le dispositif comprend un corps comprenant deux parties périphériques de canalisation de gomme, entre lesquelles sont intercalées deux parties centrales de canalisation de gomme et de guidage de fils.
- Les deux parties périphériques sont séparables l'une de l'autre et symétriques l'une de l'autre par rapport à au moins l'un des premier et second plans.
- Les deux parties centrales sont séparables l'une de l'autre et symétriques l'une de l'autre par rapport à au moins l'un des premier et second plans.

Dans un tel corps, les deux parties périphériques peuvent être sensiblement identiques. De même, les deux parties centrales peuvent être sensiblement identiques. Ceci réduit la diversité des éléments constituant le corps et facilite la fabrication, le montage et la maintenance du dispositif selon l'invention.

Le dispositif comprend une chambre d'extrusion qui, de préférence, relie les deux canaux secondaires à l'orifice d'extrusion. Selon d'autres caractéristiques optionnelles de l'invention :
- Le dispositif comprend des moyens de guidage des fils comprenant des canaux de guidage de fil munis chacun d'une extrémité aval débouchant dans la chambre d'extrusion et d'une extrémité amont disposée, en considérant la direction d'extrusion de la bande à travers l'orifice d'extrusion, en aval d'une extrémité amont du canal principal.
- Chaque canal de guidage s'étend entre ses extrémités amont et aval suivant un trajet courbe sensiblement parallèle au premier plan de symétrie, de façon que les fils débouchent dans la chambre d'extrusion sensiblement parallèlement à la direction d'extrusion.

Ces caractéristiques permettent à la fois, de faire déboucher les fils dans la chambre d'extrusion sensiblement parallèlement à la direction d'extrusion et, de canaliser la gomme dans les canaux suivant un trajet créant des pertes de charges relativement réduites et réparties de façon relativement homogène quelque soit le trajet emprunté par la gomme dans les canaux secondaires.

De préférence, le dispositif comprend deux jeux de canaux de guidage sensiblement symétriques l'un de l'autre par rapport au second plan de symétrie.

De façon avantageuse, le dispositif comprend une bride destinée au raccordement du canal principal à un dispositif d'alimentation en gomme, cette bride étant délimitée par une face dans laquelle est ménagé un orifice formant l'extrémité amont du canal principal.

Grâce à cette bride, le dispositif d'extrusion de la bande selon l'invention peut être raccordé à une extrudeuse de gomme formant dispositif unique d'alimentation du dispositif d'extrusion de gomme. Ainsi, les réglages du débit d'alimentation de la gomme et de la vitesse d'extrusion de la bande sont relativement simples à réaliser, contrairement au cas où plusieurs extrudeuses de gomme alimentent simultanément le canal principal ou chaque canal secondaire.

L'invention sera mieux comprise à la lecture de la description qui va suivre, donnée uniquement à titre d'exemple non limitatif et faite en se référant aux dessins dans lesquels :
- la figure 1 est une vue en coupe d'une installation pour la fabrication d'une bande de gomme ;
- la figure 2 est une vue en perspective, avec un arrachement, d'un dispositif selon l'invention pour l'extrusion de la bande de gomme ;
- la figure 3 est une vue en coupe du dispositif de la figure 2 selon la ligne III-III ;
- la figure 4 est une vue en coupe du dispositif de la figure 2 selon la ligne IV-IV ;
- la figure 5 est une vue en perspective d'une partie périphérique du dispositif de la figure 2 ;
- la figure 6 est une vue en perspective d'une filière du dispositif de la figure 2 ;
- la figure 7 est une vue en perspective d'une partie centrale du dispositif de la figure 2.

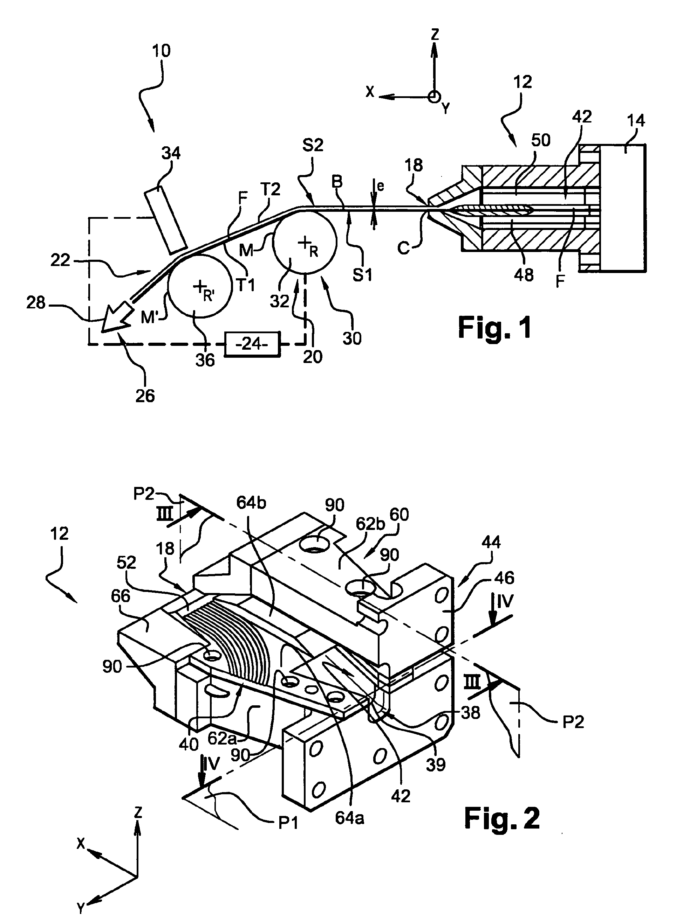

On a représenté sur la figure 1 une installation pour la fabrication d'une bande B de gomme dans laquelle sont noyés des fils F. Cette installation est désignée par la référence générale 10.

L'installation 10 comprend un dispositif d'extrusion 12 de la bande B alimenté en gomme par un unique dispositif 14. Ce dispositif d'alimentation 14 est formé par exemple par une extrudeuse unique.

Le dispositif 12 comprend également un orifice d'extrusion 18 pour la mise en forme de la bande B.

Sur les figures, on a représenté des axes X, Y, Z orthogonaux entre eux. Les axes Y et Z correspondent à des directions respectivement transversale et verticale définies telles que les dimensions de l'orifice 18 suivant ces orientations imposent la largeur et l'épaisseur e de la bande extrudée B. L'axe X, orthogonal aux axes Y et Z, correspond à une direction longitudinale d'extrusion de la bande B au travers de l'orifice 18. Dans ce qui suit, on fera référence aux termes amont et aval en considérant le sens et la direction d'extrusion de la bande B à travers l'orifice d'extrusion 18. L'orifice 18 présente, dans un plan sensiblement parallèle au plan YZ, une section sensiblement rectangulaire de contour C.

La bande B comporte deux faces libres S1, S2 opposées l'une de l'autre sensiblement parallèles au plan XY et reliées entre elles par deux bords T1, T2 opposés l'un de l'autre. La bande B comporte des fils F noyés dans la gomme s'étendant chacun selon une direction sensiblement parallèle à la direction longitudinale X de la bande B. Les directions des fils F sont coplanaires. Les fils F sont répartis transversalement de manière régulière.

L'installation 10 comprend en outre des moyens 20 de déplacement des fils par rapport à l'orifice d'extrusion 18 suivant une direction sensiblement parallèle à la direction verticale Z.

L'installation 10 comprend également des moyens 22 de mesure de la distance entre les fils F et une des faces libres S1, S2 de la bande B. Ces moyens de mesure 22 sont agencés en aval des moyens 20 de déplacement des fils F.

L'installation 10 comprend de plus des moyens 24 de régulation des moyens 20 de déplacement des fils F. Une entrée des moyens de régulation 24 est reliée aux moyens de mesure 22 et une sortie des moyens de régulation 24 est reliée aux moyens de déplacement 20.

L'installation 10 comprend enfin des moyens 26 de mise en tension de la bande B entre l'orifice 18 et les moyens 20 de déplacement des fils F. Ces moyens de mise en tension 26 sont agencés en aval des moyens de mesure 22. Ces moyens de mise en tension 26, représentés de façon schématique sur la figure 1, comprennent notamment des moyens de traction 28, par exemple un rouleau de stockage autour duquel la bande B est destinée à être enroulée.

Les moyens de déplacement 20 des fils F comprennent des moyens 30 de déplacement de la bande B agencés en aval de l'orifice d'extrusion 18.

En l'espèce, les moyens de déplacement 30 comprennent un rouleau 32 de guidage de la bande B. Le rouleau 32 est monté rotatif autour d'un axe de rotation R sensiblement parallèle à la direction transversale Y. L'axe R est déplaçable selon une direction sensiblement parallèle à la direction verticale Z.

Dans l'exemple illustré à la figure 1, les moyens de mesure 22 comprennent un capteur sans contact 34. De préférence, le capteur 34 est du type à courant de Foucault. Les moyens de mesure 22 comprennent également un rouleau 36 de support de la bande B agencé au droit du capteur 34. Le rouleau de support 36 est monté rotatif autour d'un axe de rotation R' sensiblement parallèle à la direction transversale Y. L'axe R' est fixe par rapport au capteur 34.

Les rouleaux 32 et 36 sont munis respectivement de surfaces périphériques M et M' de contact avec la bande B.

On a représenté plus en détail sur les figures 2 à 7 le dispositif d'extrusion 12 selon l'invention. Ce dispositif d'extrusion 12 comprend des moyens de canalisation 38 de la gomme entre un orifice amont 39 d'entrée de la gomme dans le dispositif 12 et l'orifice d'extrusion 18 de sortie de la bande B. Le dispositif 12 comprend également des moyens 40 de guidage des fils F dans le dispositif 10.

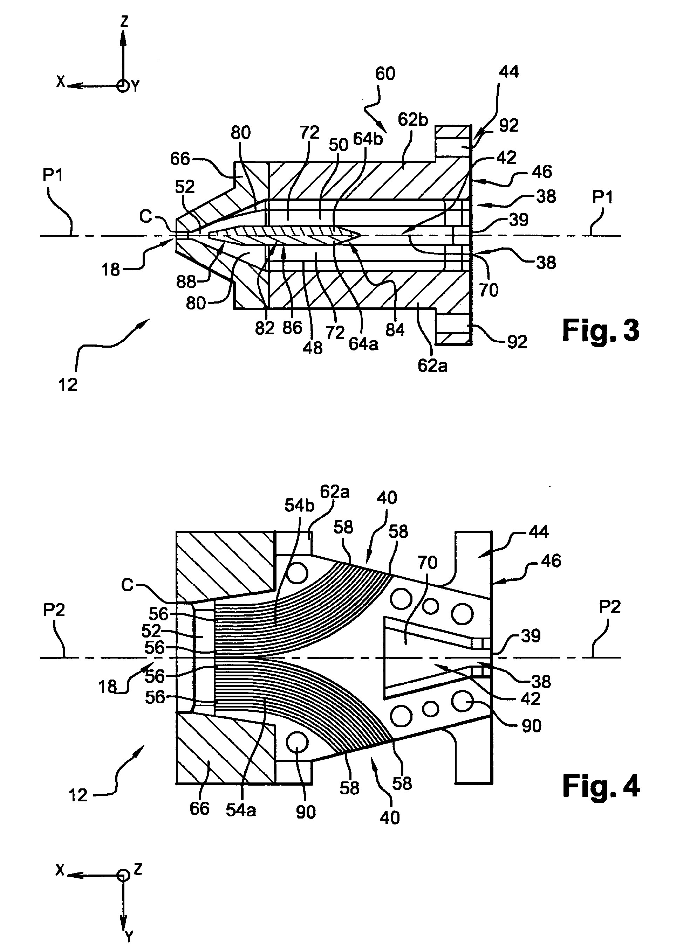

Comme illustré sur les figures 3 et 4, les moyens de canalisation 38 comprennent un canal principal amont 42 destiné à être raccordé au dispositif d'alimentation 14 par une bride 44. La bride 44 est délimitée par une face 46 dans laquelle est ménagé l'orifice 39 formant l'extrémité amont du canal principal 42. Le canal principal 42 est destiné à canaliser un flux principal de gomme généré par le dispositif d'alimentation 14.

De plus, les moyens de canalisation 38 comprennent des premier et second canaux secondaires aval 48, 50 prolongeant le canal principal amont 42 et reliés à l'orifice d'extrusion 18 par une chambre d'extrusion 52. Le premier canal secondaire 48 est destiné à canaliser un premier flux de gomme secondaire destiné à former, dans la chambre d'extrusion 52, une première partie B1 de la bande B comprise sensiblement entre les fils F et la face libre S1. De façon analogue, le second canal secondaire 50 est destiné à canaliser un second flux de gomme secondaire destiné à former, dans la chambre d'extrusion 52, une deuxième partie B2 de la bande B comprise sensiblement entre les fils F et la face libre S2.

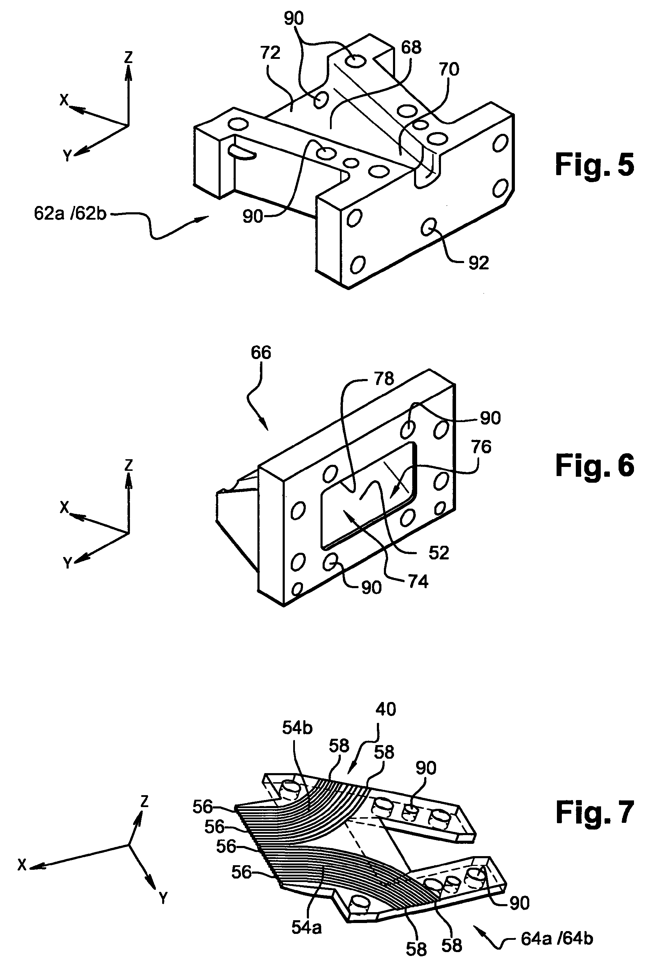

En référence aux figures 4 et 7, les moyens 40 de guidage des fils F comprennent deux jeux de canaux 54a, 54b de guidage des fils F. Chaque canal 54a, 54b est muni d'une extrémité aval 56 débouchant dans la chambre d'extrusion 52 et d'une extrémité amont 58 disposée en aval d'une extrémité amont du canal principal 42.

Dans l'exemple représenté sur les figures, le dispositif 12 comprend un corps 60 comprenant, d'une part, deux parties périphériques 62a, 62b de canalisation de gomme (figure 5) et, d'autre part, deux parties centrales 64a, 64b de canalisation de gomme et de guidage des fils F (figure7). Les parties 64a, 64b sont intercalées entre les parties 62a, 62b. Le dispositif 12 comprend également une filière 66 d'extrusion de la bande de gomme B (figure 6).

En l'espèce, comme illustré sur la figure 7, chaque canal de guidage 54a, 54b présente une section sensiblement cylindrique et comprend deux demi canaux hémicylindriques ménagés respectivement dans les deux parties centrales 64a, 64b.

Les deux parties périphériques 62a, 62b sont séparables l'une de l'autre et sensiblement symétriques l'une de l'autre par rapport à un premier plan de symétrie P1 sensiblement parallèle au plan XY. De façon analogue, les parties centrales 64a, 64b sont séparables l'une de l'autre et sensiblement symétriques l'une de l'autre par rapport à ce premier plan de symétrie P1. La filière 66 est séparable des parties 62a, 62b, 64a, 64b et a pour plan de symétrie le premier plan P1 et également un second plan P2.

Le second plan P2 est sensiblement parallèle au plan YZ et orthogonal au premier plan P1. La droite d'intersection des premier et second plans P1, P2 est sensiblement parallèle à la direction d'extrusion de la bande à travers l'orifice d'extrusion 18.

En outre, chaque partie 62a, 62b, 64a, 64b a pour plan de symétrie le second plan de symétrie P2 .

Les deux jeux de canaux de guidage 54a, 54b sont sensiblement symétriques l'un de l'autre par rapport au second plan de symétrie P2. Entre les extrémités aval et amont 56, 58, chaque canal de guidage s'étend suivant un trajet courbe.

Entre ses extrémités aval et amont 56, 58, chaque canal de guidage 54a, 54b s'étend suivant un trajet courbe sensiblement parallèle au premier plan de symétrie P1 de façon que les fils F débouchent dans la chambre d'extrusion 52 sensiblement parallèlement à la direction d'extrusion X et de façon que les fils F pénètrent dans les canaux 54a, 54b sensiblement parallèlement à une direction inclinée par rapport à la direction d'extrusion X. Les trajets des canaux 54a, 54b d'un même jeux de canaux sont sensiblement parallèles entre eux.

De plus, le contour C, le canal principal 42 ainsi que les deux canaux secondaires 48, 50 ont le second plan P2 pour plan de symétrie. En outre, le contour C et le canal principal 42 ont également le premier plan P1 pour plan de symétrie. Les canaux secondaires 48, 50 sont symétriques l'un de l'autre par rapport au premier plan P1.

Comme illustré sur la figure 5, chaque partie 62a, 62b comporte un évidemment interne 68 présentant une forme tronconique évasée autour de l'axe X et s'élargissant en s'éloignant de l'orifice 39 d'entrée de gomme en direction de l'orifice d'extrusion 18. L'évidemment 68 comporte deux parties 70, 72. Chaque partie 70, agencée en amont de la partie 72, délimite le canal principal. Chaque partie 72 délimite un canal secondaire 48, 50 correspondant.

La filière 66 présente un orifice 74 délimitée par deux parois 76, 78 convergeant vers l'orifice d'extrusion 18. Les parois 76, 78 délimitent respectivement une partie 80 de chaque canal secondaire 48, 50 comme représenté sur la figure 3. Les parois 76, 78 délimitent également la chambre d'extrusion 52.

En référence à la figure 3, chaque partie centrale 64a, 64b comporte une surface 82 de canalisation délimitant un canal secondaire 48, 50 correspondant. La surface 82 comporte des première, deuxième et troisième parties 84, 86, 88 se succédant dans cet ordre dans le sens d'extrusion. Les premières parties 84 ménagées sur les deux parties centrales 64a, 64b divergent dans le sens d'extrusion. Les deuxièmes parties 86 ménagées dans les deux parties centrales 64a, 64b sont sensiblement parallèles au premier plan de symétrie P1. Enfin, les troisièmes parties 88 ménagées dans les deux parties centrales 64a, 64b convergent dans le sens d'extrusion.

Les parties périphériques 62a, 62b, centrales 64a, 64b et la filière 66 comportent chacune des orifices 90 destinés au passage d'éléments de serrage des parties 62a, 62b, 64a, 64b et de la filière 66 entre elles.

La bride 44 comporte également des orifices 92 destinés au passage d'éléments de serrage pour le raccordement du dispositif 12 et du dispositif d'alimentation 14.

L'installation 10 permet de mettre en oeuvre un procédé de fabrication de la bande de gomme B dont on décrira ci-dessous les principaux aspects liés à l'invention.

Pour fabriquer la bande B, on alimente le dispositif 12 en gomme grâce au dispositif 14. Les fils F sont guidés dans les canaux 54a, 54b et mis en tension entre l'orifice 18 et le rouleau 32 grâce au moyens de traction 28.

On extrude la bande de gomme B au travers de l'orifice d'extrusion 18 et on régule la distance entre les fils F et la face libre S1. A cet effet, on mesure la distance entre les fils F et la face libre S1, c'est à dire l'épaisseur de la partie B1 de la bande B.

Le capteur 34 mesure la distance qui le sépare des fils F. L'épaisseur e1 de la partie B1 de la bande B est sensiblement égale à la distance entre les fils F et la face libre S1 en contact avec la surface M' du rouleau 36. Connaissant la distance entre le capteur 34 et la surface M', on déduit, de la mesure de la distance entre le capteur 34 et les fils F, la distance entre les fils F et la surface S1 en contact avec la surface M'. En supposant que l'épaisseur e totale de la bande est constante, on déduit également une épaisseur e2 de la partie B2 de la bande B.

En fonction de la valeur de e1 ou e2, on déplace, en aval de l'orifice d'extrusion 18, la bande B suivant une direction sensiblement parallèle à la direction verticale Z. En référence à la figure 1, si la distance mesurée entre les fils F et la face libre S1 s'écarte d'une consigne prédéterminée, les moyens de régulation 24 commandent les moyens 30 de déplacement de la bande B afin de déplacer l'axe R du rouleau 32 dans le sens approprié.

L'invention ne se limite pas au mode de réalisation précédemment décrit.

En effet, les faces libres S1, S2 pourraient ne pas être planes, ni parallèles entre elles.

De plus, les canaux de guidage 54a, 54b pourraient présenter des dimensions variables et adaptées aux dimensions des fils noyés dans la gomme. De plus, les canaux pourraient être plus ou moins espacés entre eux et répartis transversalement de façon relativement irrégulière.

## Revendications

1. Dispositif (12) pour l'extrusion d'une bande (B) de gomme dans laquelle sont noyés des fils (F), le dispositif (12) étant du type comprenant :
- des moyens de canalisation (38) de la gomme jusqu'à un orifice d'extrusion (18) pour la mise en forme de la bande (B), le contour (C) de cet orifice d'extrusion (18) présentant des premier et second plans (P1, P2) de symétrie orthogonaux tels que leur droite d'intersection est sensiblement parallèle à une direction d'extrusion (X) de la bande (B) à travers l'orifice d'extrusion (18),
- les moyens de canalisation (38) comprenant un canal principal amont (42), ayant le premier plan (P1) pour plan de symétrie, prolongé par deux canaux secondaires (48, 50) aval sensiblement symétriques l'un de l'autre par rapport au premier plan (P1), **caractérisé en ce que** le canal principal (42) et les deux canaux secondaires (48, 50) aval ont également le second plan (P2) pour plan de symétrie.

2. Dispositif (12) selon la revendication 1, comprenant un corps (60) comprenant deux parties périphériques (64a, 64b) de canalisation de gomme, entre lesquelles sont intercalées deux parties centrales (62a, 62b) de canalisation de gomme et de guidage de fils (F).

3. Dispositif (12) selon la revendication 2, dans lequel les deux parties périphériques (64a, 64b) sont séparables l'une de l'autre et symétriques l'une de l'autre par rapport à au moins l'un des premier et second plans (P1, P2).

4. Dispositif (12) selon la revendication 2 ou 3, dans lequel les deux parties centrales (62a, 62b) sont séparables l'une de l'autre et symétriques l'une de l'autre par rapport à au moins l'un des premier et second plans (P1, P2).

5. Dispositif (12) selon l'une quelconque des revendications précédentes, comprenant une chambre d'extrusion (52) reliant les deux canaux secondaires (48, 50) à l'orifice d'extrusion (18).

6. Dispositif (12) selon la revendication 5, comprenant des moyens (40) de guidage des fils (F) comprenant des canaux (54a, 54b) de guidage de fil munis chacun d'une extrémité aval (56) débouchant dans la chambre d'extrusion (52) et d'une extrémité amont (58) disposée, en considérant la direction d'extrusion de la bande (B) à travers l'orifice d'extrusion (18), en aval d'une extrémité amont (39) du canal principal.

7. Dispositif (12) selon la revendication 6, dans lequel chaque canal (54a, 54b) de guidage s'étend entre ses extrémités amont et aval suivant un trajet courbe sensiblement parallèle au premier plan (P1) de symétrie, de façon que les fils débouchent dans la chambre d'extrusion (52) sensiblement parallèlement à la direction d'extrusion (X).

8. Dispositif (12) selon la revendication 6 ou 7, comprenant deux jeux de canaux (54a, 54b) de guidage sensiblement symétriques l'un de l'autre par rapport au second plan (P2) de symétrie.

9. Dispositif (12) selon l'une quelconque des revendications 6 à 8, comprenant une bride (44) destinée au raccordement du canal principal (42) à un dispositif d'alimentation (14) en gomme, cette bride (44) étant délimitée par une face (46) dans laquelle est ménagé un orifice (39) formant l'extrémité amont du canal principal (42).

## Claims

1. Device (12) for extruding a strip (B) of rubber in which threads (F) are embedded, the device (12) being of the type comprising:
- means (38) for channelling the rubber as far as an extrusion orifice (18) for shaping the strip (B), the contour (C) of this extrusion orifice (18) having first and second planes (P1, P2) of symmetry which are orthogonal such that their straight line of intersection is substantially parallel to a direction of extrusion (X) of the strip (B) through the extrusion orifice (18),
- the channelling means (38) comprising a main upstream runner (42) having the first plane (P1) as its plane of symmetry, extended by two downstream secondary runners (48, 50) which are substantially symmetric with one another about the first plane (P1),
**characterized in that** the main runner (42) and the two downstream second runners (48, 50) also have the second plane (P2) as their plane of symmetry.

2. Device (12) according to Claim 1, comprising a body (60) comprising two peripheral rubber channelling parts (64a, 64b) between which two central rubber-channelling and threads (F) guiding central parts (62a, 62b) are interposed.

3. Device (12) according to Claim 2, in which the two peripheral parts (64a, 64b) are separable from one another and symmetric with one another about at least one of the first and second planes (P1, P2).

4. Device (12) according to Claim 2 or 3, in which the two central parts (62a, 62b) are separable from one another and symmetric with one another about at least one of the first and second planes (P1, P2).

5. Device (12) according to any one of the preceding claims, comprising an extrusion chamber (52) connecting the two secondary runners (48, 50) to the extrusion orifice (18).

6. Device (12) according to Claim 5, comprising means (40) for guiding the threads (F), these means comprising thread-guiding runners (54a, 54b) each equipped with a downstream end (56) opening into the extrusion chamber (52) and with an upstream end (58) positioned, when considering the direction in which the strip (B) is extruded through the extrusion orifice (18), downstream of an upstream end (39) of the main runner.

7. Device (12) according to Claim 6, in which each guide runner (54a, 54b) extends between its upstream and downstream ends in a curved path substantially parallel to the first plane (P1) of symmetry, so that the threads emerge into the extrusion chamber (52) substantially parallel to the direction of extrusion (X).

8. Device (12) according to Claim 6 or 7, comprising two sets of guide runners (54a, 54b) which are substantially symmetric to one another about the second plane (P2) of symmetry.

9. Device (12) according to any one of Claims 6 to 8, comprising a flange (44) intended for connecting the main runner (42) to a rubber feed device (14), this flange (44) being delimited by a face (46) in which there is formed an orifice (39) that forms the upstream end of the main runner (42).

## Patentansprüche

1. Vorrichtung (12) zum Extrudieren eines Gummibands (B), in das Drähte (F) eingebettet sind, wobei die Vorrichtung (12) von der Art ist, die enthält:
- Einrichtungen (38) zur Kanalisierung des Gummis bis zu einer Extrusionsöffnung (18), um das Band (B) zu formen, wobei der Umriss (C) dieser Extrusionsöffnung (18) erste und zweite orthogonale Symmetrieebenen (P1, P2) aufweist, derart, dass ihre Schnittgerade im Wesentlichen parallel zu einer Extrusionsrichtung (X) des Bands (B) durch die Extrusionsöffnung (18) hindurch ist,
- wobei die Kanalisierungseinrichtungen (38) einen stromaufwärts vorderen Hauptkanal (42) enthalten, der die erste Ebene (P1) als Symmetrieebene hat, verlängert durch zwei zueinander bezüglich der ersten Ebene (P1) im Wesentlichen symmetrische, stromabwärts hintere Sekundärkanäle (48, 50),
**dadurch gekennzeichnet, dass** der Hauptkanal (42) und die zwei hinteren Sekundärkanäle (48, 50) ebenfalls die zweite Ebene (P2) als Symmetrieebene haben.

2. Vorrichtung (12) nach Anspruch 1, die einen Körper (60) enthält, der zwei Umfangsbereiche (62a, 62b) zur Gummikanalisierung enthält, zwischen die zwei Mittelbereiche (64a, 64b) zur Gummikanalisierung und Führung von Drähten (F) eingefügt sind.

3. Vorrichtung (12) nach Anspruch 2, bei der die zwei Umfangsbereiche (62a, 62b) voneinander trennbar und bezüglich mindestens einer der ersten und zweiten Ebenen (P1, P2) zueinander symmetrisch sind.

4. Vorrichtung (12) nach Anspruch 2 oder 3, bei der die zwei Mittelbereiche (64a, 64b) voneinander trennbar und bezüglich mindestens einer der ersten und zweiten Ebenen (P1, P2) zueinander symmetrisch sind.

5. Vorrichtung (12) nach einem der vorhergehenden Ansprüche, die eine Extrusionskammer (52) enthält, die die zwei Sekundärkanäle (48, 50) mit der Extrusionsöffnung (18) verbindet.

6. Vorrichtung (12) nach Anspruch 5, die Einrichtungen (40) zur Führung der Drähte (F) enthält, die Drahtführungskanäle (54a, 54b) enthalten, die je mit einem hinteren Ende (56), das in der Extrusionskammer (52) mündet, und mit einem vorderen Ende (58) versehen sind, das in Extrusionsrichtung des Bands (B) durch die Extrusionsöffnung (18) hindurch gesehen hinter einem vorderen Ende (39) des Hauptkanals angeordnet ist.

7. Vorrichtung (12) nach Anspruch 6, bei der jeder Führungskanal (54a, 54b) sich zwischen seinem vorderen und hinteren Ende gemäß einer gekrümmten Bahn im Wesentlichen parallel zur ersten Symmetrieebene (P1) erstreckt, damit die Drähte in die Extrusionskammer (52) im Wesentlichen parallel zur Extrusionsrichtung (X) münden.

8. Vorrichtung (12) nach Anspruch 6 oder 7, die zwei Sätze von Führungskanälen (54a, 54b) enthält, die bezüglich der zweiten Symmetrieebene (P2) im Wesentlichen symmetrisch zueinander sind.

9. Vorrichtung (12) nach einem der Ansprüche 6 bis 8, die einen Flansch (44) enthält, der für den Anschluss des Hauptkanals (42) an eine Gummizufuhreinrichtung (14) bestimmt ist, wobei dieser Flansch (44) von einer Seite (46) begrenzt wird, in der eine Öffnung (39) ausgespart ist, die das vordere Ende des Hauptkanals (42) formt.
